(19) Europäisches Patentamt

European Patent Office

Office européen des brevets

(11) **EP 1 466 048 B1**

(12) **FASCICULE DE BREVET EUROPEEN**

(45) Date de publication et mention
de la délivrance du brevet:
**23.08.2006 Bulletin 2006/34**

(21) Numéro de dépôt: **02792886.0**

(22) Date de dépôt: **04.12.2002**

(51) Int Cl.:
***D07B 1/06*** (2006.01)

(86) Numéro de dépôt international:
**PCT/EP2002/013708**

(87) Numéro de publication internationale:
**WO 2003/048447 (12.06.2003 Gazette 2003/24)**

(54) **CABLE METALLIQUE UTILISABLE DANS UNE ARMATURE DE CARCASSE D'UN PNEUMATIQUE**

METALLKORD ZUR VERSTÄRKUNG EINER REIFENKARKASSE

METAL CORD FOR USE IN A TYRE CARCASS REINFORCEMENT

(84) Etats contractants désignés:
**AT BE BG CH CY CZ DE DK EE ES FI FR GB GR
IE IT LI LU MC NL PT SE SI SK TR**

(30) Priorité: **07.12.2001 FR 0115889**

(43) Date de publication de la demande:
**13.10.2004 Bulletin 2004/42**

(73) Titulaires:
• **Société de Technologie Michelin
63000 Clermont-Ferrand Cedex 09 (FR)**
• **MICHELIN RECHERCHE ET TECHNIQUE S.A.
1763 Granges-Paccot (CH)**

(72) Inventeurs:
• **ESNAULT, Philippe
Greenville, SC 29615 (US)**
• **VO, Le Tu, Anh
F-78280 Guyancourt (FR)**

(74) Mandataire: **Ribière, Joel
M.F.P. Michelin,
SGD/LG/PI - F35 - Ladoux
63040 Clermont-Ferrand Cedex 9 (FR)**

(56) Documents cités:
**WO-A-98/55674          DE-A- 4 120 554
FR-A- 2 551 104**

**Description**

La présente invention concerne un câble métallique utilisable pour renforcer une armature de carcasse d'un pneumatique, tel qu'un pneumatique poids-lourd, un tissu composite utilisable comme nappe d'une telle armature de carcasse, une armature de carcasse comportant ce tissu et un pneumatique incorporant cette armature de carcasse.

D'une manière générale, les éléments de renforcement qui sont utilisés dans les tissus composites des armatures de carcasse de pneumatiques poids-lourd sont constitués de câbles métalliques, comportant par exemple plusieurs couches de fils ou plusieurs torons qui sont enroulés ensemble en hélice selon des pas variables. Les fils présentent usuellement un diamètre compris entre 0,05 mm et 0,40 mm, et ils sont par exemple constitués d'acier perlitique dont le taux de carbone est compris entre 0,35 % et 1,2 %. Ces fils sont obtenus par écrouissage, ayant été préalablement revêtus d'une fine couche d'un métal (tel que du laiton, du zinc ou du bronze) pour favoriser ledit écrouissage et/ou l'adhésion avec la composition de caoutchouc utilisée dans ledit tissu composite.

Lorsque le roulage d'un pneumatique poids-lourd implique des contraintes de flambage pour les câbles qu'il comporte dans son armature de carcasse et, à plus forte raison, lorsque ce roulage s'effectue sous une pression interne réduite ou nulle, l'expérience montre que ces câbles sont fortement fléchis, de telle manière qu'ils tendent à flamber et à s'ouvrir pour former ce que l'homme du métier appelle des « cages d'oiseaux ». Ces câbles peuvent alors se rompre prématurément, déterminant ainsi la limite d'endurance en roulage « à plat » du pneumatique poids-lourd.

Afin de retarder ce flambage des câbles d'armature de carcasse, on a proposé d'adjoindre à chaque câble un fil de frette de diamètre réduit (usuellement compris entre 0,10 mm et 0,25 mm) et enroulé en hélice sur la surface externe du câble. En général, ce fil de frette est enroulé selon un pas très réduit (par exemple allant de 3 mm à 5,5 mm) et dans un sens opposé ou identique à celui de l'enroulement des fils de ladite couche externe.

Le fil de frette est généralement constitué du même matériau métallique que celui des fils du câble (i.e. en acier perlitique).

S'il est établi qu'une telle frette métallique améliore effectivement la tenue à la compression et au flambage du câble, on sait qu'elle génère une forte usure par fretting des fils les plus externes dudit câble. Cette usure par fretting entraîne une dégradation relative de l'endurance des câbles en comparaison de celle des câbles non frettés, ce qui contribue à pénaliser l'endurance en roulage « à plat » du pneumatique incorporant ces câbles.

C'est la raison pour laquelle on a testé dans le passé des fils de frette d'une nature autre que celle des fils du câble, qui soient susceptibles de minimiser cette usure par fretting tout en conférant au câble une résistance satisfaisante à la compression et au flambage.

Le document de brevet français FR-A-1 011 211 divulgue un câble métallique fretté pour pneumatique destiné à présenter une résistance satisfaisante aux efforts de flambage en roulage normal. Ce câble est pourvu d'une frette en matériau textile naturel ou artificiel qui est constituée d'un fil ou d'un ruban.

Le document de brevet français FR-A-2 551 104 divulgue un câble métallique fretté pour pneumatique destiné à réduire l'usure par fretting de la frette. Ce câble est de type à multicouches, et la frette utilisée est formée d'un fil de section aplatie en matière plastique ou en caoutchouc, ou encore en composite métal/ matière plastique ou métal/ caoutchouc.

Le document de brevet allemand DE-A-4 120 554 divulgue un câble métallique pourvu d'une frette non métallique qui se rétracte à chaud, pour réduire la corrosion et l'usure par contact entre la frette et la couche externe du câble. Cette frette peut être formée d'un polyamide ou d'un polyester.

Le document de brevet sud-coréen KR-B-95/04085 divulgue un câble en acier pourvu d'une frette non métallique qui est formée d'un ou de plusieurs câbles. Cette frette peut être choisie à l'intérieur d'une famille de polymères textiles ou non comprenant du Nylon®, du polyéthylène, du polyuréthanne, de la rayonne, de la fibre de verre, de la fibre de carbone et un polyamide aromatique de dénomination Kevlar®.

Le document de brevet européen EP-A-566 392 divulgue un câble métallique pour pneumatique, qui est pourvu d'un fil de frette de section aplatie, en vue de réduire l'épaisseur du câble et de la nappe de renforcement l'incorporant, tout lui conférant des propriétés mécaniques améliorées. Ce fil de frette peut être aussi bien métallique que réalisé en matière plastique, par exemple en aramide ou en nylon®, ou encore en composite métal/ plastique.

Le document de brevet japonais JP-A-94/191 207 divulgue un câble métallique pour nappe sommet de pneumatique, qui est pourvu d'une frette destinée à conférer une adhésion satisfaisante de ce câble au caoutchouc, ainsi qu'une endurance améliorée vis-à-vis de la séparation de ladite nappe. Cette frette est formée d'un fil unique, de plusieurs fils ou d'un feuillard, et elle est constituée à titre préférentiel de nylon®, de rayonne, ou de coton pour optimiser l'adhésion précitée, voire de polyvinylalcool (PVA) ou d'un polyester.

Un inconvénient de ces câbles pourvus d'une frette textile réside dans l'endurance en roulage à « plat » relativement réduite qu'ils conferent à un pneumatique, tel qu'un pneumatique poids-lourd, dont l'armature de carcasse en est pourvue, notamment en comparaison de l'endurance obtenue avec des câbles pourvus d'une frette métallique.

Le but de la présente invention est de remédier à cet inconvénient, et il est atteint en ce que la demanderesse vient de découvrir d'une manière surprenante qu'une frette textile en polyester ou polyester-amide aromatique thermotrope, permet d'accroître d'une manière très significative le kilométrage parcouru en roulage « à plat » par un pneumatique incorporant un câble métallique qui comporte ladite frette comme élément de renfort de son armature de carcasse, par rapport au kilométrage obtenu dans les mêmes conditions en utilisant une frette de géométrie identique qui est constituée d'un métal ou d'un autre textile, tel que l'aramide, en conférant à ce câble selon l'invention une résistance mécanique améliorée vis-à-vis des efforts de compression et de fortes flexions dont l'armature de carcasse est le siège dans ces conditions de roulage « à plat », sans pénaliser la résistance de ce câble selon l'invention vis-à-vis de l'usure par fretting par rapport à celle présentée par des câbles pourvus d'une frette en aramide.

Dans la présente demande, on entendra par l'expression « câble métallique » un câble dont au moins la surface externe sur laquelle est enroulée ladite frette est de nature métallique (i.e. dont la surface externe est constituée de fils ou d'assemblages de fils métalliques).

Avantageusement, le câble fretté selon l'invention est utilisé comme élément de renforcement d'une armature de carcasse d'un pneumatique poids-lourd.

Le polymère de départ qui est utilisé pour l'obtention de la frette selon l'invention est tout polyester ou polyester-amide aromatique thermotrope (i.e. sous forme cristal-liquide à l'état fondu), qui est filable dans cet état fondu.

De manière connue, le caractère thermotrope d'un polymère est déterminé par mesure optique, en testant l'anisotropie optique de ce polymère par observation en phase fondue (i.e. au-dessus de la température de fusion du polymère) d'une goutte dudit polymère entre un polariseur et un analyseur linéaires croisés d'un microscope optique de polarisation, au repos, c'est-à-dire en l'absence de contrainte dynamique.

Si la préparation ci-dessus est optiquement anisotrope, c'est-à-dire qu'elle dépolarise la lumière lorsqu'elle est placée entre le polariseur et l'analyseur linéaires croisés (elle présente ainsi une transmission de la lumière lui conférant une texture plus ou moins colorée), alors le polymère testé est dit thermotrope.

A l'inverse, si ladite préparation est optiquement isotrope dans les mêmes conditions d'observation, ne présentant pas cette propriété de dépolarisation (le champ du microscope restant noir), alors le polymère testé n'est pas thermotrope.

De tels polyesters ou polyester-amides thermotropes, connus de l'homme du métier, sont dits "entièrement aromatiques" et ils ont été décrits dans un grand nombre de documents.

On citera par exemple les documents de brevet EP-A-91 253, EP-A-205 346, EP-A-267 984, EP-A-508 786, EP-A-737 707, US-A-3 491 180, US-A-4 083 829, US-A-4 161 470, US-A-4 183 895, US-A-4 447 592, US-A-4 734 240, US-A-4 746 694, US-A-5 049 295, US-A-5 110 896, US-A-5 250 654, US-A-5 296 542, JP-A-92/333 616, JP-A-96/260 242.

De préférence, on utilise un polyester aromatique thermotrope spécifique, qui consiste essentiellement en des unités récurrentes (A) de 6-oxy-2-naphthoyle et (B) de 4-oxybenzoyle, le rapport molaire A/B étant compris dans un domaine allant de 10:90 à 90: 10, de préférence de 20:80 à 30:70.

Ce polyester aromatique thermotrope est commercialisé notamment par la société Hoechst Celanese sous le nom de « VECTRA » avec un rapport molaire A:B égal à 27:73, et il a été décrit dans le document de brevet US-A-4 161 470.

Il peut être obtenu par copolymérisation de l'acide p-hydroxybenzoïque et de l'acide 6-hydroxy-2-naphtoïque, ces deux acides étant éventuellement substitués. Il présente de manière connue un excellent compromis de propriétés en termes de résistance thermique, de résistance chimique, de facilité de mise en oeuvre et d'aptitude au filage, en raison notamment d'un point de fusion relativement bas.

La frette selon l'invention peut être constituée d'un fil unique, ou de plusieurs fils tordus ensemble pour former un retors (usuellement désigné sous le nom de « cord » ou « plied yarn » en Anglais), étant entendu que dans la présente description le terme « fil » peut désigner aussi bien :

- une fibre multifilamentaire constituée de filaments élémentaires de faible diamètre parallèles entre eux,
- un filé à base d'une multitude de tels filaments élémentaires qui sont tordus ensemble (par exemple un filé à base d'une centaine de filaments élémentaires présentant chacun un diamètre voisin d'une dizaine de microns), ou
- un monofilament unique.

Par monofilament, on entend un filament unitaire dont le diamètre ou l'épaisseur D (i.e. la plus petite dimension transversale de sa section droite lorsque celle-ci n'est pas circulaire) est au moins égal(e) à 40 $\mu$m (titre minimal de 1,7 tex). Cette définition couvre donc aussi bien des monofilaments de forme essentiellement cylindrique (i.e. à section circulaire) que des monofilaments oblongs, de forme aplatie, ou encore des bandelettes ou films d'épaisseur D.

Selon un exemple préférentiel de réalisation de l'invention, ledit fil de frette est constitué d'un monofilament.

On se reportera aux documents de brevet internationaux WO-A-92/12018 et WO-A-98/55674 pour les conditions générales d'obtention d'un tel monofilament par filage, ainsi que d'un éventuel traitement thermique de postpolycondensation (qui permet d'élever le degré de polymérisation du polymère de départ et d'augmenter ainsi la ténacité du monofilament).

A l'état brut de filage ("as-spun"), ce monofilament a la caractéristique de ne pas se contracter à chaud, ce qui est exprimé par la relation $\Delta L \geq 0$, $\Delta L$ représentant sa variation de longueur (en %) après 2 minutes à 235 $\pm$ 5° C, sous une prétension de 0,2 cN/tex. On se reportera également à ce document WO-A-98/55 674 pour les conditions de mesure de cette variation thermique de longueur.Toutes les propriétés mécaniques ci-après sont mesurées sur des monofilaments ayant été soumis à un conditionnement préalable, c'est-à-dire à un stockage (après séchage) pendant au moins 24 heures, avant mesure, dans une atmosphère standard selon la norme européenne DIN EN 20139 (température de 20° C $\pm$ 2° C et hygrométrie de 65 % $\pm$ 2 %).

Le titre des monofilaments est déterminé sur au moins trois échantillons, chacun correspondant à une longueur de 50 m, par pesée de cette longueur de monofilament. Le titre est donné en tex (poids en g de 1000 m de monofilament - rappel: 0,111 tex égal à 1 denier).

Les propriétés mécaniques en extension (ténacité, module initial, allongement à la rupture) sont mesurées de manière connue à l'aide d'une machine de traction « ZWICK GmbH & Co » (Allemagne) de type 1435 ou 1445. Les monofilaments subissent une traction sur une longueur initiale de 400 mm à une vitesse nominale de 50 mm/min. Tous les résultats donnés dans la suite de la présente description sont une moyenne de 10 mesures.

La ténacité (force-rupture divisée par le titre) et le module initial sont indiqués en cN/tex (rappel: 1 cN/tex = 0,11 g/den). Le module initial est défini comme la pente de la partie linéaire de la courbe force-allongement, qui intervient juste après une prétension standard de 0,5 cN/tex. L'allongement à la rupture est indiqué en pourcentage.

Le diamètre D des monofilaments est déterminé par le calcul à partir du titre des monofilaments et de leur masse volumique, selon la formule :

$$D = 2.10^{1,5} \; [Ti / \pi\rho]^{0,5}$$

avec D en $\mu$m, Ti étant le titre (tex), et p étant la masse volumique en g/cm³.

Dans le cas d'un monofilament à section transversale non circulaire, c'est-à-dire autre qu'un monofilament de forme essentiellement cylindrique, le paramètre D, qui représente alors la plus petite dimension du monofilament dans un plan normal à l'axe de ce dernier, est déterminé non plus par le calcul mais expérimentalement, par microscopie optique sur une coupe transversale de ce monofilament, ce dernier étant par exemple préalablement enrobé dans une résine pour faciliter la coupe.

La frette utilisable dans un câble selon l'invention présente de manière préférentielle un diamètre ou une épaisseur allant de 0,08 mm à 0,40 mm.

De préférence, la frette selon l'invention présente un titre inférieur à 50 tex et préférentiellement inférieur à 30 tex.

Egalement à titre préférentiel, cette frette présente une ténacité supérieure à 180 cN/tex, un module initial supérieur à 3500 cN/tex, et un allongement à la rupture supérieur à 2,5%.

On notera que ce module initial élevé permet d'assurer une bonne fonction de frettage pour le câble selon l'invention, et que cette ténacité élevée permet de conserver à la frette un diamètre réduit par rapport à celui dudit câble.

Egalement à titre préférentiel, la frette du câble selon l'invention est enroulée en hélice sur ladite surface externe selon un pas allant de 3 mm à 5,5 mm.

Avantageusement, on soumet la frette selon l'invention à un traitement d'encollage, afin de permettre son adhésion à la composition de caoutchouc destinée à être solidarisée avec les câbles qui sont chacun pourvus de cette frette.

Selon un exemple de réalisation de l'invention, ledit câble est de type à multicouches.

Ce câble comporte une couche interne ou âme, qui est constituée d'un fil droit unitaire ou de plusieurs fils de diamètres identiques ou différents qui sont parallèles entre eux ou qui sont enroulés ensemble en hélice selon un pas donné, cette couche interne étant entourée par une couche externe métallique constituée de fils de diamètres identiques ou différents qui sont enroulés ensemble en hélice selon un autre pas donné, une couche intermédiaire étant prévue ou pas entre lesdites couches interne et externe, et la frette selon l'invention étant enroulée sur ladite couche externe dans un sens opposé ou identique à celui des fils de celle-ci.

Ainsi, un tel câble à multicouches peut répondre par exemple à la formule (L+M) ou (L+M+N), étant formé d'une âme de L fil(s) entourée d'au moins une couche de M fils qui est elle-même éventuellement entourée d'une couche externe de N fils, avec en général L variant de 1 à 4, M variant de 3 à 12, N variant de 8 à 20.

De tels câbles à multicouches, assemblés par la technique connue de câblage, ont été décrits dans un très grand nombre de publications. On se reportera notamment aux documents US-A-3 922 841 ; US-A-4 158 946 ; US-A-4 488 587 ; EP-A-168 858 ; EP-A-176 139 ou US-A-4 651 513 ; EP-A-194 011 ; EP-A-260 556 ou US-A-4 756 151 ; EP-A-362 570 ; EP-A-497 612 ou US-A-5 285 836 ; EP-A-568 271 ; EP-A-648 891 ; EP-A-669 421 ou US-A-5 595 057 ; EP-A-709 236 ou US-A-5 836 145 ; EP-A-719 889 ou US-A-5 697 204 ; EP-A-744 490 ou US-A-5 806 296 ; EP-A-779 390 ou US-A-5 802 829 ; EP-A-834 613 ; WO98/41682 ; RD (*Research Disclosure*) N°34054, août 1992, pp. 624-633 ; RD N°34370, novembre 1992, pp. 857-859.

**EP 1 466 048 B1**

Selon un mode de réalisation de l'invention, ces câbles à multicouches répondent à l'une ou l'autre des formules précitées (L+M) ou (L+M+N) avec L = 1, en sorte qu'ils comportent une âme constituée d'un unique fil « droit ».

A titre non limitatif, on peut par exemple citer des câbles de formule :
(1+5), (1+6), (1+5+10), (1+5+11), (1+5+12), (1+6+10), (1+6+11), (1+6+12), (1+7+11), (1+7+12), (1+7+13).

Selon un autre mode de réalisation préférentiel de l'invention, ces câbles à multicouches répondent à l'une ou l'autre desdites formules (L+M) ou (L+M+N) avec L supérieur à 1, et ils comportent alors une âme constituée de plusieurs fils assemblés parallèlement (i.e. selon un pas infini) ou bien enroulés ensemble en hélice selon un pas fini.

Dans ce dernier cas, on peut citer, toujours à titre non limitatif, des câbles de formule :
(2+7), (3+8), (3+9) ou (3+9+15), par exemple.

Selon un exemple préférentiel selon l'invention, on peut citer des câbles frettés de formule :
- (3+9). 0,18 + 0,15 avec les pas (en mm) : 6,5 / 12,5 / 3,5 et les sens de torsion : SSZ
(câble comportant une couche interne de 3 fils métalliques et une couche externe de 9 fils métalliques sur laquelle est enroulée en sens inverse une frette de 0,15 mm de diamètre selon un pas de 3,5 mm, les fils du câble présentant chacun un diamètre de 0,18 mm) ; et
- (3+9+15). 0,23 + 0,15 avec les pas (mm) : 6,5/12,5/18/3,5 et les sens de torsion SSZS
(câble comportant une couche interne de 3 fils métalliques, une couche intermédiaire de 9 fils métalliques et une couche externe de 15 fils métalliques, sur laquelle est enroulée en sens inverse la frette de 0,15 mm de diamètre selon un pas de 3,5 mm, les fils présentant chacun un diamètre de 0,23 mm).

On notera que les câbles selon l'invention peuvent être non seulement des câbles à multicouches, mais encore tous câbles au moins partiellement métalliques de type à torons (assemblés par la technique également connue de toronnage).

Un tissu composite selon l'invention comporte une composition de caoutchouc qui est renforcée par les câbles frettés selon l'invention, et ce tissu est utilisable comme nappe d'armature de carcasse d'un pneumatique, avantageusement d'un pneumatique poids-lourd.

Cette composition de caoutchouc à base (i.e., formée) d'au moins un élastomère diénique et comportant, outre cet élastomère diénique, tous les ingrédients habituels tels que charge renforçante, système de réticulation et autres additifs utilisables dans les compositions de caoutchouc pour pneumatiques.

Par élastomère "diénique", on entend de manière connue un élastomère issu au moins en partie (i.e. un homopolymère ou un copolymère) de monomères diènes c'est-à-dire de monomères porteurs de deux doubles liaisons carbone-carbone, conjuguées ou non.

De manière générale, on entend ici par élastomère diénique "essentiellement insaturé" un élastomère diénique issu au moins en partie de monomères diènes conjugués, ayant un taux de motifs ou unités d'origine diénique (diènes conjugués) qui est supérieur à 15% (% en moles). C'est ainsi, par exemple, que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%).

Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, l'élastomère diénique du composite conforme à l'invention est préférentiellement choisi dans le groupe constitué par les polybutadiènes, le caoutchouc naturel, les polyisoprènes de synthèse, les différents copolymères de butadiène, les différents copolymères d'isoprène, et les mélanges de ces élastomères.

Parmi les polybutadiènes, conviennent en particulier ceux ayant une teneur en unités - 1,2 comprise entre 4% et 80% ou ceux ayant une teneur en cis-1,4 supérieure à 80%. Parmi les polyisoprènes de synthèse, conviennent en particulier les cis-1,4-polyisoprènes, de préférence ceux ayant un taux de liaisons cis-1,4 supérieur à 90%. Parmi les copolymères de butadiène ou d'isoprène, on entend en particulier les copolymères obtenus par copolymérisation d'au moins l'un de ces deux monomères avec un ou plusieurs composés vinyle-aromatique ayant de 8 à 20 atomes de carbone. A titre de composés vinyle-aromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène. Les copolymères peuvent contenir entre 99% et 20% en poids d'unités diéniques et entre 1% et 80% en poids d'unités vinyle-aromatiques. Parmi les copolymères de butadiène ou d'isoprène ci-dessus, on citera préférentiellement les copolymères de butadiène-styrène, les copolymères d'isoprène-butadiène, les copolymères d'isoprène-styrène ou les copolymères d'isoprène-butadiène-styrène.

En résumé, convient de préférence un élastomère diénique choisi dans le groupe des élastomères diéniques fortement insaturés constitué par les polybutadiènes (BR), le caoutchouc naturel (NR), les polyisoprènes de synthèse (IR), les copolymères de butadiène-styrène (SBR), les copolymères d'isoprène-butadiène (BIR), les copolymères d'isoprène-styrène (SIR), les copolymères de butadiène-styrène-isoprène (SBIR) et les mélanges de ces élastomères.

A titre encore plus préférentiel, convient à titre majoritaire (i.e., à plus de 50 % en poids) dans la matrice élastomère de la composition de caoutchouc selon l'invention un élastomère diénique constitué de caoutchouc naturel ou d'un polyisoprène de synthèse.

Mais on peut aussi utiliser, selon un autre mode de réalisation avantageux de l'invention, des coupages (mélanges) de ces polyisoprènes avec d'autres élastomères diéniques fortement insaturés, notamment avec des élastomères SBR ou BR tels que précités.

Bien entendu, les matrices de caoutchouc des composites de l'invention peuvent contenir un seul ou plusieurs élastomère(s) diénique(s), ce(s) dernier(s) pouvant être utilisé(s) en association avec tout type d'élastomère synthétique autre que diénique, voire avec des polymères autres que des élastomères, par exemple des polymères thermoplastiques.

Les compositions de caoutchouc des tissus composites conformes à l'invention comportent également tout ou partie des additifs habituellement utilisés dans la fabrication de pneumatiques, tels que des charges renforçantes comme le noir de carbone ou la silice, des agents anti-vieillissement, par exemple des antioxydants, des huiles d'extension, des plastifiants ou des agents facilitant la mise en oeuvre des compositions à l'état cru, un système de réticulation à base soit de soufre, soit de donneurs de soufre et/ou de peroxyde, des accélérateurs, des activateurs ou retardateurs de vulcanisation, des accepteurs et donneurs de méthylène, des résines, des systèmes promoteurs d'adhésion connus du type "RFS" (résorcinol-formaldéhyde-silice) ou sels métalliques, notamment sels de cobalt.

Le tissu composite selon l'invention peut se présenter sous des formes variées, par exemple sous la forme d'une nappe, d'une bande, bandelette ou d'un bloc de caoutchouc dans lequel est incorporé le renfort métallique à l'aide de différents moyens connus de l'homme du métier, tels que par exemple des moyens de moulage, de calandrage ou de boudinage.

On notera que le tissu composite selon l'invention confère tout particulièrement à un pneumatique poids-lourd un endurance améliorée en roulage à « plat ».

Une armature de carcasse d'un pneumatique selon l'invention, tel qu'un pneumatique poids-lourd, comporte ce tissu composite, et un pneumatique selon l'invention comporte cette armature de carcasse.

Les caractéristiques précitées de la présente invention, ainsi que d'autres, seront mieux comprises à la lecture de la description suivante de plusieurs exemples de réalisation de l'invention, donnés à titre illustratif et non limitatif.

## DESCRIPTION DES TESTS D'ENDURANCE REALISES :

I. Test de traction ondulée :

Le test de "traction ondulée" est un test de fatigue bien connu de l'homme du métier, dans lequel le matériau testé est fatigué en extension uni-axiale pure (extension-extension), c'est-à-dire sans contrainte de compression. Le principe est le suivant.

Un échantillon du câble à tester, maintenu à chacune de ses 2 extrémités par les 2 mors d'une machine de traction, est soumis à une contrainte de traction ou extension dont l'intensité $\sigma$ varie de manière cyclique et symétrique ($\sigma_{moy} \pm \sigma_a$) autour d'une valeur moyenne ($\sigma_{moy}$), entre deux valeurs extrêmes $\sigma_{min}$ ($\sigma_{moy} - \sigma_a$) et $\sigma_{max}$ ($\sigma_{moy} + \sigma_a$) encadrant cette valeur moyenne, sous un rapport de charge "R" = ($\sigma_{min}/\sigma_{max}$) déterminé. La contrainte moyenne $\sigma_{moy}$ est donc liée au rapport de charge R et à l'amplitude $\sigma_a$ par la relation $\sigma_{moy} = \sigma_a(1+R)/(1-R)$.

En pratique, le test est conduit de la manière suivante.

On choisit une première amplitude de contrainte $\sigma_a$ (généralement dans un domaine de l'ordre de 1/4 à 1/3 de la résistance Rm du câble) et on lance le test de fatigue pour un nombre maximal de $10^5$ cycles (fréquence 30 Hz), le rapport de charge R étant choisi égal à 0,1.

Selon le résultat obtenu (i.e. rupture ou non-rupture du câble au bout de ces $10^5$ cycles au maximum), on applique une nouvelle amplitude $\sigma_a$ (inférieure ou supérieure à la précédente, respectivement) sur une nouvelle éprouvette, en faisant varier cette valeur $\sigma_a$ selon la méthode dite de « l'escalier » (Dixon & Mood ; Journal of the American statistical association, 43, 1948, 109-126).

On effectue ainsi 17 itérations au total, le traitement statistique des essais défini par cette méthode de « l'escalier » conduisant à la détermination d'une limite d'endurance (notée $\sigma_d$) qui correspond à une probabilité de rupture du câble de 50 % au bout des $10^5$ cycles de fatigue.

On utilise pour ce test une machine de fatigue en traction de la société Schenk (modèle PSA). La longueur utile entre les deux mors est de 10 cm, et la mesure est réalisée sous une atmosphère sèche contrôlée (taux d'humidité relative inférieur ou égal à 5 %, température de 20° C).

II. Test « courroie » :

Le test "courroie" est un test de fatigue connu qui a été décrit par exemple dans les demandes EP-A-648 891 ou WO-A-98/41682, les câbles d'acier à tester étant incorporés dans un article en caoutchouc que l'on vulcanise. Le principe de ce test est le suivant.

L'article en caoutchouc est ici une courroie sans fin réalisée avec une composition de caoutchouc couramment utilisée dans l'armature de carcasse d'un pneumatique radial. L'axe de chaque câble est orienté selon la direction longitudinale de la courroie et les câbles sont séparés des faces de cette dernière par une épaisseur de gomme d'environ 1 mm. Lorsque la courroie est disposée de façon à former un cylindre de révolution, le câble forme un enroulement en hélice de même axe que ce cylindre (par exemple, pas de l'hélice égal à environ 2,5 mm).

On fait ensuite subir à cette courroie les sollicitations suivantes.

On fait tourner la courroie autour de deux galets, de telle sorte que chaque portion élémentaire de chaque câble soit soumise à une tension de 12 % de la force à rupture initiale et subisse des cycles de variation de courbure qui la font passer d'un rayon de courbure infini à un rayon de courbure de 40 mm (poulie de diamètre égal à 80 mm), et ceci pendant 50 millions de cycles.

Le test est réalisé sous une atmosphère contrôlée, la température et l'humidité de l'air au contact de la courroie étant maintenues à environ 20° C et 60 % d'humidité relative. La durée des sollicitations pour chaque courroie est de l'ordre de 3 semaines. A la fin de ces sollicitations, on extrait les câbles des courroies par décorticage, et on mesure la force à rupture résiduelle des fils des câbles fatigués.

On réalise d'autre part une courroie identique à la précédente et on la décortique de la même façon que précédemment, mais cette fois sans soumettre les câbles au test de fatigue. On mesure ainsi la force rupture initiale des fils des câbles non fatigués.

On calcule finalement la déchéance de force à rupture après fatigue (notée $\Delta$Fm et exprimée en %), en comparant la force à rupture résiduelle à la force à rupture initiale.

La déchéance en force à rupture ainsi obtenue traduit le niveau d'usure par fretting du câble testé. Plus cette déchéance est élevée, plus l'endurance du câble vis-à-vis de l'usure par fretting est réduite.

Cette déchéance $\Delta$Fm est de manière connue due à la fatigue et à l'usure des fils causées par l'action conjointe des sollicitations et de l'eau provenant de l'air ambiant, ces conditions étant comparables à celles auxquelles sont soumis les câbles de renforcement dans des carcasses de pneumatiques.

III. <u>Test de roulage à plat</u> :

A une température de 20° C, on a fait rouler sur un volant lisse de rouleuse des pneumatiques poids-lourd sous une pression de gonflage réduite et à une vitesse donnée, en appliquant sur chaque pneumatique testé une même charge qui est représentative de la charge appliquée sur un pneumatique équipant un véhicule poids-lourd.

Plus précisément, on a procédé à deux séries de tests, l'une sous une pression de gonflage de 0,50 bar et l'autre de 0,55 bar.

Le critère d'arrêt de ces tests est l'éclatement du pneumatique, suite à une détérioration substantielle des câbles de son armature de carcasse.

## EXEMPLE DE REALISATION DE L'INVENTION :

On a comparé entre eux divers câbles métalliques frettés répondant chacun à la formule précitée (couche interne de 3 fils et couche externe de 9 fils) :

(3+9). 0,18 + 0,15 avec les pas (en mm) : 6,5 / 12,5 / 3,5 et les sens de torsion : SSZ.

Ces câbles se différencient les uns des autres uniquement par la nature du matériau de la frette dont ils sont pourvus et par le nombre de filament(s) élémentaire(s) constituant ladite frette.

Un premier câble fretté « témoin » est caractérisé par une frette métallique formée d'un fil d'acier perlitique de 0,15 mm de diamètre.

Un second câble fretté « témoin » est caractérisé par une frette textile multifilamentaire formée d'un filé de titre voisin de 22 tex, qui est constitué de 100 filaments élémentaires d'aramide de dénomination Kevlar®, chaque filament élémentaire présentant un diamètre d'environ 12 $\mu$m. Ces filaments élémentaires sont « surtordus » (i.e. tordus ensemble) selon un coefficient Z100 (torsion de 100 tours/mètre dans la direction Z) et ils sont encollés de manière connue.

Un troisième câble fretté « témoin » diffère uniquement du précédent en ce que lesdits filaments élémentaires sont « surtordus » selon un coefficient Z300 (torsion de 300 tours/mètre dans la direction Z).

Un câble fretté selon l'invention est caractérisé par une frette textile formée d'un unique monofilament de titre voisin de 25 tex (ce monofilament présentant un diamètre de 0,15 mm) qui est constitué d'un polyester aromatique thermotrope.

Ce polyester est commercialisé par la société HOECHST CELANESE sous la dénomination « VECTRA ».

On se reportera aux documents de brevet internationaux WO-A-92/12018 et WO-A-98/55674 pour les conditions d'obtention de ce monofilament, qui consistent essentiellement en un filage au fondu du polyester « VECTRA » précité, suivi d'un traitement thermique de postpolycondensation.

On a procédé à l'encollage de ce monofilament de la même manière que pour la frette en aramide desdits second et troisième câbles « témoin ».

Le tableau 1 ci-après présente les propriétés mécaniques du fil de frette utilisé pour chaque câble fretté « témoin » et selon l'invention.

En ce qui concerne le fil de frette métallique du premier câble « témoin », les mesures dynamométriques, telles que la force à la rupture Fm (charge maximale en N), l'allongement à la rupture At (allongement total en %) ou le module initial (cN/tex) sont effectuées en traction selon la norme ISO 6892 de 1984.

Tableau 1 :

| | Fil de frette | | | |
|---|---|---|---|---|
| | Pour premier câble « témoin » | Pour second câble « témoin » | Pour troisième câble « témoin » | Pour câble selon invention |
| densité du matériau de frette | 7,8 | 1,44 | 1,44 | 1,4 |
| Titre (tex) | 129 | 22,3 | 22,4 | 25,1 |
| force à rupture, N | 47 (Fm) | 33,2 (FR) | 32,8 (FR) | 53,7 (FR) |
| Té (ténacité, cN/tex) | 36 | 149 | 146 | 213 |
| allongement rupture, % | 2,1 (At) | 2,05 (AR) | 2,09 (AR) | 3,01 (AR) |
| Force sous 0,5 %(N) | 17 | 7,8 | 7,8 | 6 |
| Module initial (cN/tex) | 2630 (à 5 %) | 7000 (à 0,5 %) | 6780 (à 0,5 %) | 4780 (à 0,5 %) |

On notera que la frette en polyester aromatique thermotrope selon l'invention présente une ténacité qui est très nettement supérieure à la ténacité d'une frette en acier ou en aramide.

Le tableau 2 ci-après présente les propriétés des câbles « témoin » et selon l'invention qui ont été respectivement obtenues au moyen des fils de frette détaillés au tableau 1.

Tableau 2 :

| | Masse linéique (g/m) | Pas retordage couche interne (mm) | Pas retordage couche externe (mm) | Pas assemblage frette (mm) | Force à la rupture Fm (N) | Allongement à rupture At (%) |
|---|---|---|---|---|---|---|
| Premier câble « témoin » | 2,293 | 6,26 | 12,5 | 3,5 | 780,5 | 1,88 |
| Second câble « témoin » | 2,275 | 6,17 | 12,82 | 3,5 | 812,5 | 2,49 |
| Troisième câble « témoin » | 2,295 | 6,3 | 13,05 | 3,5 | 808,7 | 2,47 |
| Câble invention | 2,292 | 6,15 | 12,62 | 3,5 | 802,2 | 2,48 |

Les mesures de force à la rupture Fm et d'allongement à rupture At pour les câbles frettés ont été effectuées en traction selon la norme ISO 6892 de 1984.

Ce tableau 2 montre que la frette en polyester aromatique thermotrope confère au câble selon l'invention une force et un allongement à la rupture qui sont supérieurs à ceux obtenus avec une frette en acier (premier câble « témoin »), ce qui est dû à une pression de contact moindre lors de la mise en tension du câble. On peut en déduire une amélioration des performances en résistance à la traction et la fatigue du câble selon l'invention, par rapport à ce premier câble « témoin ».

Ce tableau 2 montre également que cette frette selon l'invention confère au câble qui l'incorpore une force et un allongement à la rupture qui sont pratiquement analogues à ceux obtenus avec une frette en aramide (second et troisième câbles « témoin »).

On a par ailleurs procédé à trois tests d'endurance de ces câbles « témoin » et selon l'invention (voir ci-dessus pour le descriptif de chacun de ces tests).

Un premier test d'endurance a consisté à mesurer la limite d'endurance $\sigma_D$ (MPa) en traction ondulée de chacun des câbles précités.

Un second test d'endurance a consisté à mesurer la déchéance en usure (en %) par fretting de chacun de ces câbles, au moyen d'un test « courroie ». Plus précisément, on a mesuré pour chaque câble la déchéance en usure de chaque fil de la couche interne, de chaque fil de la couche externe, et de l'ensemble des fils du câble.

Un troisième test d'endurance a consisté à mesurer le kilométrage parcouru en roulage « à plat » par des pneumatiques poids-lourd « témoin » et selon l'invention comportant respectivement des câbles frettés « témoin » et selon l'invention dans leurs armatures de carcasse. Une base 100 de référence a été attribuée au kilométrage parcouru par un premier pneumatique « témoin » comportant lesdits premiers câbles « témoin » (dont la frette est en acier), des résultats identifiés comme supérieurs à 100 témoignant d'un kilométrage obtenu en roulage « à plat » qui supérieur à celui de ce premier pneumatique « témoin », et inversement pour des résultats identifiés comme étant inférieurs à 100. Le tableau 3 ci-après présente les résultats obtenus pour chaque test d'endurance.

Tableau 3 :

| | Limite endurance $\sigma_D$ (MPa) | Déchéance force à rupture $\Delta$Fm (%) | | | Kilométrage en roulage « à plat » |
|---|---|---|---|---|---|
| | | Couche interne | Couche externe | Ensemble du câble | |
| Premier câble « témoin » | 700 | 13,2 | 14,5 | 14,2 | 100 |
| Second câble « témoin » | 735 | 8,5 | 11,3 | 10,8 | 85 |
| Troisième câble « témoin » | 727 | 9,5 | 9,9 | 9,8 | 60 |
| Câble invention | 744 | 8,6 | 10,6 | 10,1 | 222 |

Ce tableau 3 montre que la frette en polyester aromatique thermotrope confère au câble selon l'invention une endurance en roulage « à plat » qui est très significativement améliorée par rapport à celle obtenue avec une frette en acier ou en aramide. En effet, le kilométrage obtenu avec une frette selon l'invention est accru de plus de 120 % par rapport à celui obtenu avec une frette en acier, et de plus de 160 % par rapport à celui obtenu avec une frette en aramide.

Ce tableau 3 montre également que la frette en polyester aromatique thermotrope confère au câble selon l'invention une endurance à la fatigue qui est supérieure à celle obtenue avec une frette en acier (limite d'endurance en traction ondulée accrue de plus de 40 MPa) ou même en aramide (limite d'endurance en traction ondulée accrue de près de 10 MPa).

Ce tableau 3 montre en outre que la frette en polyester aromatique thermotrope confère au câble selon l'invention une résistance à l'usure par fretting des fils du câble qui est substantiellement améliorée par rapport à celle obtenue avec une frette en acier, et qui est pratiquement analogue à celle obtenue avec une frette en aramide.

Ces résultats ont été confirmés par une observation en coupe transversale du câble selon l'invention suite à ce test de fatigue, qui permet de vérifier une usure pratiquement nulle pour les fils de la couche externe de ce câble.

**Revendications**

1. Câble métallique utilisable pour renforcer une armature de carcasse d'un pneumatique, tel qu'un pneumatique poids-lourd, ledit câble comportant une frette textile, **caractérisé en ce que** ladite frette est constituée d'un polyester aromatique thermotrope ou d'un polyester-amide aromatique thermotrope.

2. Câble selon la revendication 1, **caractérisé en ce que** ladite frette est constituée d'un monofilament.

3. Câble selon la revendication 1 ou 2, **caractérisé en ce que** ladite frette présente une ténacité supérieure à 180 cN/tex.

**4.** Câble selon une des revendications 1 à 3, **caractérisé en ce que** ladite frette présente un module initial supérieur à 3500 cN/tex.

**5.** Câble selon une des revendications précédentes, **caractérisé en ce que** ladite frette présente un diamètre ou une épaisseur allant de 0,08 mm à 0,40 mm.

**6.** Câble selon une des revendications précédentes, **caractérisé en ce que** ladite frette présente un allongement à la rupture supérieur à 2,5 %.

**7.** Câble selon une des revendications précédentes, **caractérisé en ce que** ladite frette est enroulée sur ladite couche externe selon un pas allant de 3 mm à 5,5 mm.

**8.** Câble selon une des revendications précédentes, **caractérisé en ce qu'**il est de type à multicouches.

**9.** Câble selon la revendication 8, **caractérisé en ce que** ledit câble répond à la formule (L+M) ou (L+M+N), étant formé d'une couche interne de L fil(s), entourée d'au moins une couche de M fils éventuellement entourée d'une couche externe de N fils, avec L variant de 1 à 4, M variant de 3 à 12 et N variant de 8 à 20.

**10.** Câble selon la revendication 9, **caractérisé en ce que** ladite couche interne est constituée d'un fil droit unitaire, de telle manière que ledit câble répond à la formule (1+M) ou (1+M+N).

**11.** Câble selon la revendication 9, **caractérisé en ce que** ladite couche interne est constituée de plusieurs fils parallèles entre eux ou enroulés ensemble en hélice selon un pas fini.

**12.** Utilisation d'un câble selon une des revendications précédentes pour renforcer une armature de carcasse d'un pneumatique, tel qu'un pneumatique poids-lourd.

**13.** Tissu composite utilisable comme nappe d'armature de carcasse d'un pneumatique, tel qu'un pneumatique poids-lourd, **caractérisé en ce que** ledit tissu comporte une composition de caoutchouc qui est renforcée par des câbles selon une des revendications 1 à 11.

**14.** Tissu composite selon la revendication 13, **caractérisé en ce que** ladite composition de caoutchouc est à base d'au moins un élastomère diénique choisi dans le groupe constitué par les polybutadiènes, le caoutchouc naturel, les polyisoprènes de synthèse, les copolymères de butadiène-styrène, les copolymères d'isoprène-butadiène, les copolymères d'isoprène-styrène, les copolymères de butadiène-styrène-isoprène et les mélanges de ces élastomères.

**15.** Armature de carcasse d'un pneumatique, tel qu'un pneumatique poids-lourd, **caractérisé en ce qu'**elle comporte un tissu composite selon la revendication 13 ou 14.

**16.** Pneumatique, tel qu'un pneumatique poids-lourd, **caractérisé en ce qu'**il comporte une armature de carcasse selon la revendication 15.

**Claims**

**1.** A metal cable usable for reinforcing a carcass reinforcement of a tyre, such as a heavy-vehicle tyre, said cable comprising a textile wrap, **characterised in that** said wrap is formed of an aromatic thermotropic polyester or of an aromatic thermotropic polyester amide.

**2.** A cable according to Claim 1, **characterised in that** said wrap is formed of a monofilament.

**3.** A cable according to Claim 1 or 2, **characterised in that** said wrap has a tenacity greater than 180 cN/tex.

**4.** A cable according to one of Claims 1 to 3, **characterised in that** said wrap has an initial modulus greater than 3500 cN/tex.

**5.** A cable according to one of the preceding claims, **characterised in that** said wrap has a diameter or a thickness of from 0.08 mm to 0.40 mm.

6. A cable according to one of the preceding claims, **characterised in that** said wrap has an elongation at break greater than 2.5%.

7. A cable according to one of the preceding claims, **characterised in that** said wrap is wound on the outer surface of the cable in a pitch of from 3 mm to 5.5 mm.

8. A cable according to one of the preceding claims, **characterised in that** it is of multilayer type.

9. A cable according to Claim 8, **characterised in that** said cable satisfies the formula (L+M) or (L+M+N), being formed of an inner layer of L wire(s), surrounded by at least one layer of M wires possibly surrounded by an outer layer of N wires, with L varying from 1 to 4, M varying from 3 to 12 and N varying from 8 to 20.

10. A cable according to Claim 9, **characterised in that** said inner layer is formed of a unit straight wire, such that said cable satisfies the formula (1+M) or (1+M+N).

11. A cable according to Claim 9, **characterised in that** said inner layer is formed of a plurality of wires which are parallel to each other or wound together in a helix in a finite pitch.

12. The use of a cable according to one of the preceding claims for reinforcing a carcass reinforcement of a tyre, such as a heavy-vehicle tyre.

13. A composite fabric usable as carcass reinforcement ply for a tyre, such as a heavy-vehicle tyre, **characterised in that** said fabric comprises a rubber composition which is reinforced by cables according to one of Claims 1 to 11.

14. A composite fabric according to Claim 13, **characterised in that** said rubber composition is based on at least one diene elastomer selected from among the group consisting of polybutadienes, natural rubber, synthetic polyisoprenes, butadiene/styrene copolymers, isoprene/butadiene copolymers, isoprene/styrene copolymers, butadiene/styrene/isoprene copolymers and mixtures of these elastomers.

15. A carcass reinforcement for a tyre, such as a heavy-vehicle tyre, **characterised in that** it comprises a composite fabric according to Claim 13 or 14.

16. A tyre, such as a heavy-vehicle tyre, **characterised in that** it comprises a carcass reinforcement according to Claim 15.


**Patentansprüche**

1. Metallseil, das für die Verstärkung einer Karkassenbewehrung eines Luftreifens verwendbar ist, beispielsweise eines Lastkraftwagenreifens, wobei das Seil eine textile Wendel enthält, **dadurch gekennzeichnet, dass** die Wendel aus einem thermotropen aromatischen Polyester oder einem thermotropen aromatischen Polyesteramid besteht.

2. Seil nach Anspruch 1, **dadurch gekennzeichnet, dass** die Wendel aus einem Monofilament besteht.

3. Seil nach Anspruch 1 oder 2, **dadurch gekennzeichnet, dass** die Wendel eine Festigkeit über 180 cN/tex besitzt.

4. Seil nach einem der Ansprüche 1 bis 3, **dadurch gekennzeichnet, dass** die Wendel einen Anfangsmodul über 3.500 cN/tex aufweist.

5. Seil nach einem der vorhergehenden Ansprüche, **dadurch gekennzeichnet, dass** die Wendel einen Durchmesser oder eine Dicke von 0,08 bis 0,40 mm besitzt.

6. Seil nach einem der vorhergehenden Ansprüche, **dadurch gekennzeichnet, dass** die Wendel eine Bruchdehnung über 2,5 % hat.

7. Seil nach einem der vorhergehenden Ansprüche, **dadurch gekennzeichnet, dass** die Wendel mit einer Schlaglänge von 3 bis 5,5 mm über die äußere Lage gewickelt ist.

8. Seil nach einem der vorhergehenden Ansprüche, **dadurch gekennzeichnet, dass** es vom mehrlagigen Typ ist.

9. Seil nach Anspruch 8, **dadurch gekennzeichnet, dass** das Seil der Formel (L+M) oder (L+M+N) entspricht, wobei es aus einer inneren Lage von L Drähten gebildet wird, die von mindestens einer Lage von M Drähten umgeben ist, die gegebenenfalls von einer äußeren Lage von N Drähten umgeben ist, wobei L im Bereich von 1 bis 4, M im Bereich von 3 bis 12 und N im Bereich von 8 bis 20 liegt.

10. Seil nach Anspruch 9, **dadurch gekennzeichnet, dass** die innere Lage aus einem einzigen geraden Draht besteht, so dass das Seil der Formel (1+M) oder (1+M+N) entspricht.

11. Seil nach Anspruch 9, **dadurch gekennzeichnet, dass** die innere Lage aus mehreren zueinander parallelen Drähten oder schraubenförmig mit einer endlichen Schlaglänge aufgewickelten Drähten besteht.

12. Verwendung eines Seils nach einem der vorhergehenden Ansprüche für die Verstärkung einer Karkassenbewehrung eines Luftreifens, beispielsweise eines Lastkraftwagenreifens.

13. Verbundgewebe, das als Karkassenbewehrungslage eines Luftreifens, wie eines Lastkraftwagenreifens, verwendbar ist, **dadurch gekennzeichnet, dass** das Material eine Kautschukmischung umfasst, die mit Seilen nach einem der Ansprüche 1 bis 11 verstärkt ist.

14. Verbundgewebe nach Anspruch 13, **dadurch gekennzeichnet, dass** die Kautschukmischung auf mindestens einem Dienelastomer basiert, das unter den Polybutadienen, Naturkautschuk, synthetischen Polyisoprenen, Butadien-Styrol-Copolymeren, Isopren-Butadien-Copolymeren, Isopren-Styrol-Copolymeren, Butadien-Styrol-Isopren-Copolymeren und Gemischen dieser Elastomere ausgewählt ist.

15. Karkassenbewehrung eines Luftreifens, beispielsweise eines Lastkraftwagenreifens, **dadurch gekennzeichnet, dass** sie ein Verbundgewebe nach Anspruch 13 oder 14 enthält.

16. Luftreifen, beispielsweise Lastkraftwagenreifen, **dadurch gekennzeichnet, dass** er eine Karkassenbewehrung nach Anspruch 15 enthält.